# FASCICULE DE BREVET EUROPEEN

(11) **EP 4 400 192 B1**
(45) Date de publication et mention de la délivrance du brevet: **02.09.2026**
(21) Numéro de dépôt: 23202846.4
(22) Date de dépôt: 10.10.2023
(51) Int. Cl.: B01D 24/04, B01D 29/27, B01D 29/52, B01D 29/54, B01D 35/027, E04H 4/12

(54) **MÉDIA FILTRANT, SUPPORT POUR MÉDIA FILTRANT ET UNITÉ DE FILTRATION POUR BASSIN, NOTAMMENT UNE PISCINE**
FILTERMEDIUM, FILTERMEDIUMTRÄGER UND FILTEREINHEIT FÜR BECKEN, INSBESONDERE SCHWIMMBECKEN
FILTER MEDIUM, SUPPORT FOR A FILTER MEDIUM AND FILTRATION UNIT FOR A POOL, IN PARTICULAR A SWIMMING POOL

(30) Priorité: 12.01.2023 FR 2300315
(43) Date de publication de la demande: 17.07.2024
(73) Titulaire: Groupe Waterair S.A.S., 68580 Seppois le Bas (FR)
(72) Inventeur: STEINBAUER, Thierry, 90200 GIROMAGNY (FR); HENI, Wajdi, 68200 MULHOUSE (FR)
(74) Mandataire: Ipsilon

(56) Documents cités:
- WO-A1-03/028847
- WO-A1-2011/133186
- KR-B1- 102 289 572
- KR-U- 20130 004 182
- US-B1- 6 241 899

## Description

### Domaine technique

La présente invention concerne un média filtrant de type moléculaire, un support pour média filtrant, et une unité de filtration comportant ledit support pour filtrer l'eau d'un bassin, notamment d'une piscine. Plus particulièrement, le média filtrant comporte au moins une poche filtrante dans laquelle est enfermé au moins un substrat de filtration moléculaire, solide, agencé pour piéger des contaminants moléculaires transportés par l'eau à traiter.

### Technique antérieure

Les groupes de filtration pour bassin, notamment pour piscine, sont des équipement bien connus et indispensables pour garantir une eau claire et saine, tel que celui décrit dans la publication WO 03/028847 A1 appartenant à la demanderesse. Le groupe de filtration décrit permet de nettoyer l'eau d'un bassin en mode continu ou en mode discontinu en fonction des conditions d'exploitation du bassin. A cet effet, une pompe hydraulique à turbine centrifuge à effet d'aspiration est montée dans le groupe de filtration en aval d'une unité de filtration pour aspirer l'eau à la surface du bassin par dépression au travers de l'unité de filtration et la refouler dans le bassin à proximité de la zone d'aspiration. Cet exemple de réalisation n'est bien entendu pas limitatif, et tout autre type de groupe de filtration et/ou de pompe est compatible avec l'invention.

L'unité de filtration peut comporter un ou plusieurs médias filtrants de type connu, tels que du sable de différentes granulométries, des filtres textiles, et similaires, conditionnés dans des poches filtrantes ou des cartouches filtrantes interchangeables. La filtration peut s'effectuer sur deux niveaux : une filtration particulaire ou mécanique pour éliminer les impuretés ainsi que les matières organiques, et une filtration moléculaire ou chimique pour éliminer les produits dérivés de son entretien, tels que ceux créés par le chlore, ou encore par la dégradation des matières organiques présentes dans la piscine. En effet, le traitement au chlore est primordial pour garantir une désinfection efficace de l'eau et une baignade en toute sécurité. Cependant, le chlore est sensible aux rayons ultra-violets et se dégrade rapidement. En outre, des matières organiques, telles des feuilles et autres produits végétaux, peuvent se trouver dans l'eau de baignade et se dégrader.

Pour éviter de rajouter constamment du chlore, il est connu de stabiliser le chlore en ajoutant un produit stabilisant, tel que l'acide cyanurique, en quantité contrôlée. L'inconvénient est que l'acide cyanurique ne se consomme pas et s'accumule dans l'eau du bassin. Le dosage idéal de stabilisant est de 20 à 30mg/l. De 50 à 60 mg/l, ce dosage est acceptable mais doit être surveillé. En revanche, si le taux de stabilisant dépasse 70 mg/l, alors l'eau est surstabilisée. La conséquence est que l'action désinfectante du chlore est dégradée, voire inhibée. Des champignons et des algues vont commencer à proliférer dans le bassin. Il convient donc de vidanger régulièrement une partie de la piscine et de renouveler au moins la moitié de l'eau, pour diluer l'acide cyanurique et faire baisser la concentration sous le seuil de 70 mg/l. Pour éviter cet inconvénient, il convient de contrôler régulièrement les paramètres de l'eau, et notamment sa concentration en acide cyanurique, ce qui est particulièrement contraignant.

La dégradation des matières organiques peut également générer des sous-produits ou produits dérivés, tels que des phosphates ou des nitrates, dont la concentration peut être profitable à la prolifération des algues. Il convient donc également de vérifier régulièrement leur présence et d'éliminer ces contaminants le cas échéant.

Pour pallier cet inconvénient, il est connu d'ajouter dans le système de filtration, un média filtrant de type moléculaire, tel que du charbon actif pour piéger par adsorption les molécules d'acide cyanurique et freiner ainsi la croissance du taux de stabilisant dans l'eau. Le charbon actif a d'autres avantages et permet également d'adsorber les matières organiques et certains contaminants présents dans l'eau, d'éliminer les odeurs et le mauvais goût de l'eau, et de clarifier l'eau de la piscine. Dans son article, R. Potwora a également montré l'affinité entre le charbon actif et les quatre formes des THMs (R. Potwora, « Trihalomethane Removal with Activated Carbon », Water Conditioning & Purification, p. 22 24, juin 2006). Les THMs (trihalomethanes) et le chloroforme se forment dans l'eau lorsque le chlore utilisé pour la désinfection réagit avec des composés organiques. Ces composés organiques chlorés représentent un danger pour la santé public et leur élimination nécessaire.

Le charbon actif est le plus souvent constitué de charbon de bois, mais peut aussi être constitué de coque de noix de coco ou de houille de bois. On dit qu'il est actif car il a subi des traitements qui le rendent encore plus poreux grâce à des chimies de surface spécifique qui lui confèrent plus d'affinité avec les molécules cibles. Cette qualité le rend particulièrement attirant pour les contaminants moléculaires et les impuretés. Ainsi, il a un grand pouvoir de filtration moléculaire et d'adsorption.

Le charbon actif est majoritairement utilisé sous forme de grains ou de blocs, déposés en vrac dans la partie supérieure d'un filtre à sable ou directement dans le panier d'un skimmer. Il existe aussi des filtres de piscine à charbon actif ou des cartouches de charbon actif, qui se changent au minimum une fois par an. Cependant, le charbon actif est érodable sous l'action de l'eau, et libère de fines particules, appelées également des poussières ou des fines de charbon actif, qui passent au travers des cartouches et des filtres particulaires, se retrouvent dans l'eau, et se déposent au fond du bassin. Cet inconvénient compromet l'efficacité de la filtration qui peut se colmater et générer des pertes de charges, et dégrade la qualité de l'eau ainsi que l'esthétique de toute la piscine. Il ajoute une contrainte en termes de nettoyage du bassin et d'entretien du système de filtration. En outre, le charbon actif, ayant pour effet d'adsorber et non de détruire les micro-organismes, doit être changé régulièrement pour maintenir son efficacité. S'il est utilisé en vrac, le remplacement du charbon actif usagé par du neuf est complexe à réaliser et source de poussières et de salissures.

Les publications KR 2013 0004182 U et WO 2011/133186 A1 proposent des dispositifs de filtration pour piscine, pourvus de poches filtrantes fermées, pouvant contenir du charbon actif, ces poches étant amovibles et remplaçables, conçues pour assurer une filtration moléculaire et simultanément une filtration particulaire. Ces poches sont suspendues par une de leurs extrémités dans le dispositif de filtration ou introduites librement dans un compartiment annulaire du dispositif de filtration. L'inconvénient majeur de ces solutions est l'incapacité de scinder de façon indépendante la filtration particulaire ou mécanique de la filtration moléculaire. Ainsi, le potentiel de filtration moléculaire, à savoir la capacité de rétention ou adsorption des molécules cibles par le charbon actif, sera rapidement altéré par la filtration mécanique requise pour assurer simultanément les deux fonctions. Par ailleurs, aucune de ces solutions n'empêche les fines de charbon actif de sortir des poches et de polluer l'eau de la piscine. En outre, les poches de filtration ne sont pas maintenues de manière stable dans le flux de l'eau et n'assurent pas un contact optimal entre l'eau qui les traverse et le charbon actif qu'elles contiennent.

La publication KR 102 289 572 B1 concerne un dispositif de filtration particulaire pour des installations de traitement des eaux usées, dont le cahier de charges n'a pas de rapport avec le traitement de l'eau d'une piscine. Et la publication US 6 241 899 B1 décrit un sac filtrant, jetable et ouvert pour être monté sur un filtre pour piscine, n'assurant qu'une fonction de filtration particulaire.

Par ailleurs, suite notamment à une contamination par des algues, le taux de phosphates PO4 peut augmenter dans des proportions néfastes à la qualité des eaux de baignade. Il convient là également de pouvoir procéder à leur élimination, notamment à l'aide d'anti-phosphates liquides à manipuler et à doser avec précautions.

### Présentation de l'invention

La présente invention vise à pallier ces inconvénients en proposant un nouveau média filtrant, dédié uniquement à la filtration moléculaire de l'eau d'un bassin, comportant notamment du charbon actif, mais pouvant comporter des anti-phosphates solides et/ou tout autre substrat de filtration moléculaire, ce nouveau média filtrant constituant un consommable, facile à stocker, à utiliser et à manipuler, qui assure une infusion maximale du substrat de filtration dans l'eau qui traverse le média filtrant pour atteindre une capacité de rétention ou d'adsorption optimale des molécules cibles par ledit substrat, ce nouveau média filtrant étant propre puisque l'érosion du substrat de filtration reste contenue à l'intérieur du média filtrant. En outre, le nouveau média filtrant est conçu de manière universelle pour être adapté ou facilement adaptable à tout type d'unité de filtration. Il entre dans une économie circulaire, est compostable, apporte une solution écologique pour détoxifier l'eau de la piscine et permettre de réduire la concentration en stabilisant et/ou tout autre contaminant tels que phosphates, nitrates, THMs, chloroforme et/ou autres métaux lourds. L'invention vise également une unité de filtration adaptée spécifiquement à ce nouveau média filtrant et facilitant son remplacement.

Dans ce but, l'invention concerne un média filtrant tel que défini en préambule, dans lequel ladite au moins une poche filtrante est perméable et poreuse de sorte à assurer d'une part un passage de l'eau à traiter à travers ladite poche, sans nécessité de différence de pression entre l'intérieur et l'extérieur de ladite poche, pour permettre une infusion dudit substrat de filtration dans l'eau à traiter, et d'autre part une barrière audit au moins un substrat de filtration, pour empêcher des fines de substrat de filtration érodé par l'eau à traiter de s'échapper de ladite poche filtrante et de polluer l'eau du bassin.

Dans une forme préférée de l'invention, ladite au moins une poche filtrante est souple, présente une forme de tube cylindrique fermé à ses deux extrémités aplaties, et comporte des moyens de fixation à un support, lesdits moyens de fixation étant disposés dans les deux extrémités aplaties de ladite poche. En outre, ladite poche filtrante est réalisée dans un matériau offrant une perméabilité à l'air à 125Pa comprise entre 5001/m²s et 10001/m²s et une porosité comprise entre 0,5µ et 40µ.

Ainsi, la poche filtrante est maintenue par ses deux extrémités opposées, de préférence parallèlement au sens de circulation de l'eau, et ses propriétés de perméabilité et de porosité favorisent le contact de l'eau avec le substrat de filtration qu'elle contient, tout en empêchant les particules fines du substrat de s'échapper de la poche.

Ledit au moins un substrat de filtration solide peut être choisi dans le groupe comprenant des granulés de charbon actif, des zéolithes, des billes d'argile, des grains de résine anti-phosphate, des grains d'argent, agencés pour piéger les contaminants choisis dans le groupe comprenant l'acide cyanurique, des phosphates, des nitrates, les THMs, le chloroforme, des métaux lourds. Dans le cas du charbon actif, il peut être issu de coques de noix de coco.

De manière avantageuse, ladite au moins une poche filtrante est partiellement remplie avec ledit au moins un substrat de filtration, le taux de remplissage pouvant être compris entre 50% et 90%. Cette caractéristique favorise encore le contact de l'eau avec le substrat pour une adsorption optimale des molécules cibles.

Ladite poche filtrante peut être réalisée dans un produit textile intissé, non tissé, tissé, tricoté et/ou tressé, à partir de fils, filaments et/ou fibres, ou dans un film extrudé et micro-perforé, dans une matière synthétique, hydrophobe, préférentiellement recyclable, choisie dans le groupe comportant les polypropylènes (PP), les polyéthylènes téréphtalates (PET), les polyéthylènes (PE), ou une combinaison de ces matières.

Ledit média filtrant comporte avantageusement un nombre N de poches filtrantes, les poches filtrantes pouvant contenir un même substrat de filtration ou au moins deux substrats de filtration différents. Les N poches filtrantes peuvent être reliées entre elles par un lien pour former un chapelet.

Le but de l'invention est également atteint par un support de média filtrant, caractérisé en ce qu'il comporte un média filtrant tel que défini ci-dessus et des moyens de réception coopérant avec les moyens de fixation dudit média filtrant pour positionner et maintenir ledit média filtrant par ses deux extrémités et permettre son montage et son démontage dudit support.

Ledit support de média filtrant peut comporter un touret comprenant deux flasques parallèles et un tube central reliant les deux flasques, chacun desdits flasques comportant lesdits moyens de réception dudit média filtrant, qui peuvent comporter au moins un crochet. Dans ce cas, les moyens de fixation prévus sur ledit média filtrant comportent au moins un orifice pour recevoir ledit crochet.

Si ledit média filtrant comporte N poches filtrantes, alors les N poches filtrantes sont avantageusement disposées autour du tube central dudit support, s'étendent parallèlement audit tube central, et sont accrochées aux deux flasques dudit support.

En outre au moins un des flasques dudit support de média filtrant peut comporter avantageusement un joint périphérique agencé pour former une soupape de régulation.

Le but de l'invention est atteint enfin par une unité de filtration comportant une cuve pourvue au moins d'un orifice d'entrée et d'un orifice de sortie pour permettre une circulation de l'eau à traiter, ladite cuve comportant au moins un étage de filtration moléculaire comportant au moins un support de média filtrant tel que défini ci-dessus.

Ladite cuve peut comporter au moins deux étages de filtration superposés, dont un étage de filtration moléculaire et un étage de filtration particulaire, ledit étage de filtration moléculaire étant préférentiellement situé en aval dudit étage de filtration particulaire, et les deux étages de filtration étant séparés entre eux par le joint périphérique formant une soupape de régulation, prévu sur un des flasques dudit support de média filtrant.

Ladite unité de filtration peut être conçue de manière modulaire, le rapport entre la hauteur de l'étage de filtration moléculaire et la hauteur de l'étage de filtration particulaire étant modulable et déterminé en fonction des besoins de filtration.

Un autre but de l'invention est l'utilisation du média filtrant tel que défini ci-dessus, sans support, posé directement dans la partie supérieure d'un filtre à sable et/ou dans le panier d'un skimmer et/ou accroché à l'intérieur d'une chaussette de filtration.

L'invention concerne également un procédé de filtration d'eau dans un bassin notamment une piscine, comportant au moins une étape de filtration particulaire de l'eau à traiter et une étape de filtration moléculaire de l'eau à traiter effectuée séparément de ladite étape de filtration particulaire, procédé dans lequel ladite étape de filtration moléculaire est effectuée par un média filtrant tel que défini ci-dessus.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
- La figure 1 est une vue en coupe axiale d'une unité de filtration comportant un support de média filtrant selon l'invention,
- La figure 2 est une vue en perspective du support de média filtrant entrant dans l'unité de filtration de la figure 1,
- La figure 3 est une vue similaire à la figure 2 du support seul sans média filtrant,
- La figure 4A est une vue de dessus d'un média filtrant contenu dans le support de la figure 2,
- La figure 4B est une vue de face du média filtrant de la figure 4A, et
- La figure 5 est une vue en perspective d'un média filtrant comportant plusieurs poches filtrantes reliées en chapelet.

### Description des modes de réalisation

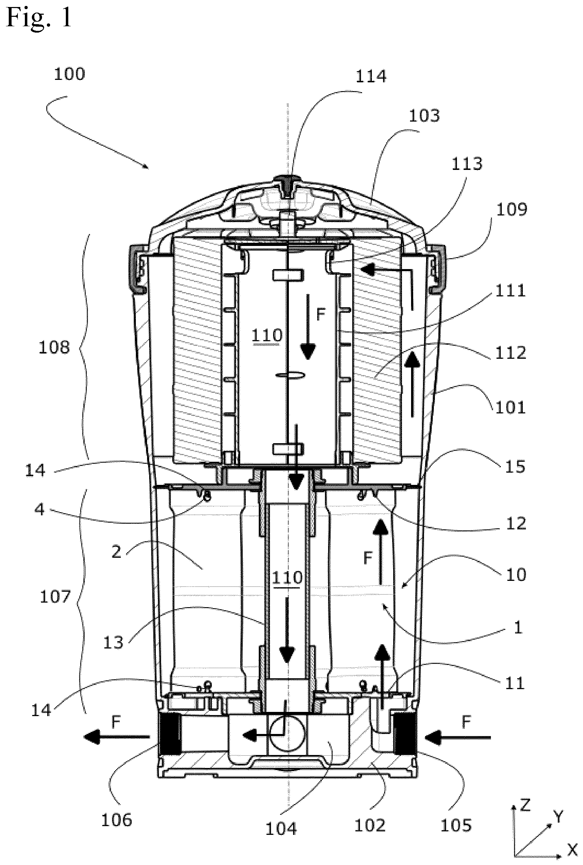

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Les axes X, Y, Z sont quant à eux définis par un repère orthonormé illustré à la figure 1. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. Cette tolérance est notamment introduite par l'adverbe « sensiblement », sans que ce terme soit nécessairement répété devant chaque adjectif.

En référence aux figures, le média filtrant 1 selon l'invention est prévu pour entrer dans une unité de filtration 100, dont un exemple est représenté à la figure 1. Dans cet exemple, l'unité de filtration 100 comporte une cuve 101 ayant une forme sensiblement cylindrique selon l'axe Z, pourvue d'un fond 102 et d'un couvercle 103 amovible. La forme de l'unité de filtration 100 n'est pas limitative à une forme cylindrique mais peut présenter toute autre forme adaptée au système ou groupe de filtration dans lequel il entre et/ou auquel il est couplé hydrauliquement. Le fond 102 comporte un double fond délimitant une chambre de répartition 104. La chambre de répartition 104 comporte au moins un orifice d'entrée 105 et un orifice de sortie 106, raccordés respectivement à des conduits d'aspiration et de refoulement de l'eau à traiter (non représentés).

L'unité de filtration 100 comporte deux étages de filtration superposés, dont un étage de filtration moléculaire 107 en partie inférieure, et un étage de filtration particulaire 108 en partie supérieure de la cuve 101. Le couvercle 103 de l'unité de filtration 100 est assemblé à la cuve 101 par tout moyen démontable, tel que par vissage, clippage, baïonnette, et similaire. Un joint périphérique 109 peut être rapporté sur la cuve 101 pour étanchéifier la zone d'assemblage avec le couvercle 103. Le couvercle 103 est amovible pour pouvoir être ouvert ou retiré afin d'accéder aux étages de filtration 107, 108 en vue de changer les médias filtrants, qui sont des consommables. Dans l'exemple illustré, les deux étages de filtration 107, 108 sont superposés et centrés l'un par rapport à l'autre ainsi que par rapport à la cuve 101, par des formes d'emboitement complémentaires prévues sur chacun des supports. Lorsque le couvercle 103 est fermé, il appuie sur l'étage supérieur dans l'axe Z et assure le maintien sans jeu des étages de filtration 107, 108 entre eux dans ladite cuve 101.

La circulation de l'eau à traiter dans l'unité de filtration 100 est représentée par les flèches F, depuis l'orifice d'entrée 105 de l'eau à traiter jusqu'à l'orifice de sortie 106 de l'eau traitée en passant d'abord dans l'étage inférieur 107 qui assure une filtration moléculaire, puis dans l'étage supérieur 108 qui assure une filtration particulaire, avant de transiter dans un conduit central 110 qui traverse les deux étages jusqu' à la chambre de distribution 104. L'étage de filtration moléculaire 107 est par conséquent situé en aval de l'étage de filtration particulaire 108. Les deux étages de filtration 107, 108 sont séparés entre eux par un joint périphérique 15, formant soupape de régulation, prévu sur le support inférieur, comme expliqué plus loin. Bien entendu, toute autre conception d'unité de filtration 100 peut convenir, de même que le nombre d'étages de filtration et la disposition de ces étages entre eux peuvent varier.

En outre, l'unité de filtration 100 est conçue de manière modulaire et peut être adaptée au cas par cas en fonction des besoins, des matières à filtrer et des contaminants à piéger. Dans l'exemple représenté, les deux étages de filtration 107 et 108 occupent chacun environ 50% du volume de la cuve 101. Le volume de la cuve 101 peut être réparti différemment en modifiant respectivement la hauteur des deux étages de filtration, pour augmenter le volume de filtration moléculaire par rapport au volume de filtration particulaire ou inversement, en fonction des besoins en pouvoir filtrant.

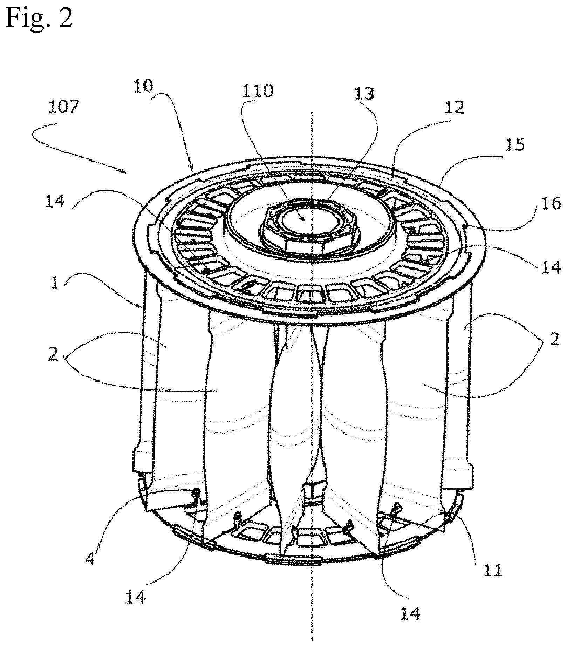

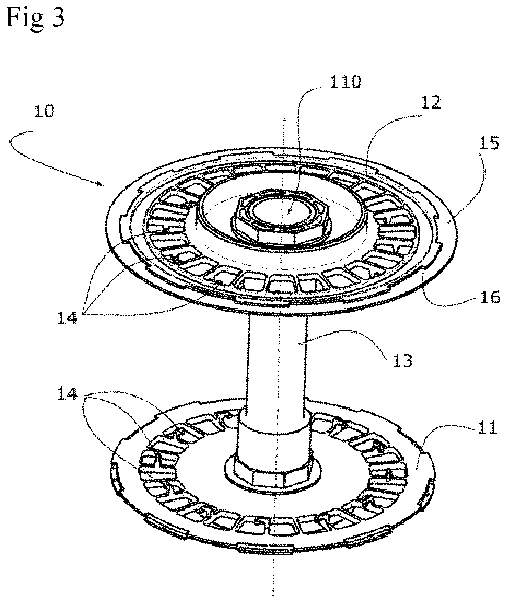

L'étage de filtration moléculaire 107 est représenté plus en détail dans les figures 2 et 3. Il comporte un support 10 représenté respectivement avec et sans média filtrant 1. Dans cet exemple, le support de média filtrant 1 présente une forme de touret comprenant deux flasques parallèles dont un flasque inférieur 11 et un flasque supérieur 12, reliés entre eux par un tube central 13 selon l'axe Z. Le support 10 adopte donc une position verticale dans l'unité de filtration 100, telle que représentée dans les figures. Les flasques 11 et 12 sont ajourés pour permettre le passage de l'eau dans un sens de circulation aller. De même, le tube central 13 est creux et définit en partie le conduit central 110 pour permettre le passage de l'eau dans l'autre sens de circulation retour. La longueur du tube central 13 définit la hauteur de l'étage de filtration moléculaire 107 et est donc variable en fonction des besoins.

Dans l'exemple représenté, les deux flasques 11 et 12 comportent des moyens de réception 14 du média filtrant 1. Plus précisément, ces moyens de réception 14 comportent des crochets supérieurs et inférieurs aptes à coopérer avec des orifices 4 correspondants prévus dans le média filtrant 1. Les crochets 14 supérieurs et inférieurs sont disposés face à face et alignés sur une verticale, ou décalés et alignés une droite inclinée par rapport à la verticale. De même, les orifices 4 prévus dans les deux extrémités du média filtrant 1 sont alignés sur un axe médian ou décalés l'un de l'autre. Ces moyens de réception 14 permettent un montage et un démontage facile et rapide du média filtrant 1. Ils permettent en outre de positionner et de maintenir correctement le média filtrant 1 dans l'étage de filtration 107 par rapport au sens de circulation de l'eau, parallèlement au flux d'eau ou avec une légère inclinaison, et d'éviter les effets de flottabilité. Bien entendu tout autre moyen de réception 14 permettant un montage rapide et réversible du média filtrant 1 est possible.

Le maintien du média filtrant 1 parallèle ou sensiblement parallèle au flux d'eau qui le traverse permet d'atteindre les objectifs suivants :
- un contact optimal entre le substrat de filtration et l'eau chargée avec la/les molécule(s) cible(s) ;
- un renouvellement permanent de l'eau au contact du substrat de filtration ;
- une action mécanique de l'eau sur le substrat de filtration (brassage) ;
- un nettoyage automatique de la surface externe du média filtrant 1 qui n'a pas pour vocation d'assurer une filtration mécanique. En effet, maitriser l'état de cette surface est un gage de pérennité de la solution technique proposée par l'invention. A l'inverse, et comme c'est le cas dans les dispositifs de l'état de la technique, si le média filtrant 1 devait assurer simultanément une filtration mécanique, alors la surface externe aurait tendance à se colmater, réduisant drastiquement le rendement de la filtration moléculaire. Le média filtrant 1 selon l'invention permet grâce à ses spécificités techniques un compromis efficace entre ces deux types de filtration : la filtration moléculaire de l'eau à travers le média et le substrat, et la filtration du substrat qui reste confiné dans le média.

Le flasque supérieur 12 du support de média 10 est agencé pour recevoir un joint périphérique 15 plat, un joint à lèvre ou similaire. Ce joint périphérique 15 peut être logé dans une réservation périphérique 16 et maintenu par emboitement, ou fixé au flasque 12 par tout autre moyen technique. Il remplit plusieurs fonctions : il oriente l'eau à traiter en direction du média filtrant 1, et forme une soupape de régulation agencée pour ouvrir ou fermer un passage périphérique pour l'eau entre les deux étages de filtration 107, 108. En cas de colmatage au niveau de l'étage de filtration 107 inférieur, le joint 15 se déforme et se soulève au moins partiellement, sous l'effet d'une dépression, libérant ainsi un passage pour l'eau en dehors du média filtrant 1. Dans ce cas, l'eau ne passe pas dans le média filtrant 1, mais le débit d'eau nominal défini par la pompe du groupe de filtration est restauré.

Dans l'exemple représenté à la figure 2, le média filtrant 1 comporte N poches filtrantes 2, disposées autour du tube central 13 du support 10. Elles s'étendent verticalement, parallèlement au tube central 13 et au sens de circulation de l'eau à traiter, et sont accrochées aux deux flasques 11 et 12 du support 10 via les moyens de réception 14.

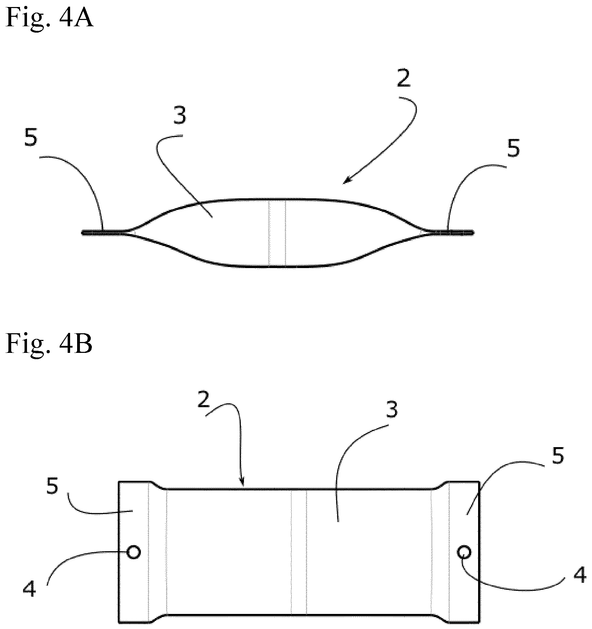

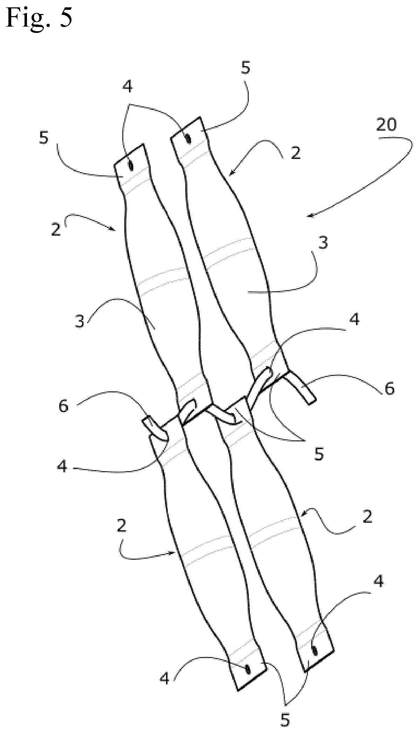

En référence également aux figures 4A, 4B et 5, le média filtrant 1 peut comporter une ou plusieurs poches filtrantes 2, contenant chacune un ou plusieurs substrats de filtration (non visible), en phase solide, de préférence sous forme granulaire et conditionnés en vrac. Le nombre N de poches filtrantes 2 peut être compris par exemple entre 1 et 50, en fonction de la forme et des dimensions des poches filtrantes 2 et en fonction du débit d'eau à traiter, sans que ces valeurs ne soient limitatives.

Les poches filtrantes 2 peuvent présenter différents formats, volumes et formes en fonction notamment du support 10 qui les reçoit et du débit d'eau à traiter. Dans l'exemple représenté, les poches filtrantes 2 sont formées d'un tube cylindrique 3, allongé et dont les deux extrémités 5 sont aplaties et fermées pour délimiter un volume intérieur fermé apte à contenir un substrat de filtration. Chaque extrémité 5 comporte des moyens de fixation 4 complémentaires aux moyens de réception 14 prévus dans le support de média filtrant 10. Dans l'exemple représenté, les moyens de fixation 4 sont constitués d'orifices pouvant se glisser sur les crochets du support. Le nombre d'orifices peut être supérieur à un en fonction des moyens de réception 14 du support.

Conformément à la figure 5, lorsque le média filtrant 1 comporte plusieurs poches filtrantes 2, celles-ci peuvent être attachées l'une à l'autre par un lien 6 pour former un chapelet 20. Dans ce cas, le lien 6 passe à travers l'orifice 4 prévu dans une des extrémités 5 des poches filtrantes 2, sans gêner l'accrochage de toutes les poches filtrantes 2 par leurs deux extrémités 5 dans le support 10. Le chapelet 20 comporte ainsi un nombre N de poches filtrantes 2 adapté au support de média filtrant 10 et aux besoins, facilite la fabrication, le stockage, la manutention et la mise en place du média filtrant 1.

Le chapelet 20 de poches filtrantes 2 peut bien entendu se présenter sous différentes formes : les poches peuvent être liées entre elles par leurs bords longitudinaux ou transversaux au moyen de zones sécables. Cette disposition facilite également la fabrication, le stockage et la manutention du média filtrant 1. Elle permet de disposer d'un nombre de poches filtrantes 2 adapté au support 10, ces poches pouvant être séparées l'une de l'autre pour être accrochées individuellement audit support.

Le média filtrant 1 peut être utilisé en combinaison avec le support 10 spécifique décrit en référence aux figures 1 à 3, lequel est utilisé avec l'unité de filtration 100 décrite en référence à la figure 1 ou avec toute autre unité de filtration compatible.

Cependant, le média filtrant 1 de l'invention peut être utilisé seul, c'est à dire sans le support 10. Dans ce cas, les poches filtrantes 2 reliées en chapelet 20 selon la figure 5, ou utilisées individuellement, peuvent être placées directement dans la partie supérieure d'un filtre à sable (non représenté), dans le panier d'un skimmer (non représenté), ou encore accrochées à l'intérieur d'une chaussette de filtration (non représentée) comme celle décrite dans la publication FR 2 830 461 B1 de la demanderesse, sans que ces exemples ne soient limitatifs. Si les poches filtrantes 2 sont en chapelet 20, leur mise en place dans ces différents moyens de filtration et leur remplacement sont facilités. En outre, le fait que les poches filtrantes 2 sont reliées en chapelet 20, évite qu'elles ne se mélangent dans le sable en cas de contre lavage du filtre à sable pour le nettoyer et le régénérer.

Toutes les poches filtrantes 2 ou une partie seulement des poches filtrantes 2 sont préférentiellement remplies de charbon actif, les autres poches pouvant contenir un ou plusieurs autres substrats de filtration de type moléculaire, tels que ceux énumérés ci-après. Préférentiellement, les poches filtrantes 2 sont partiellement remplies pour éviter le compactage des grains du substrat de filtration. Lors de la circulation de l'eau, les grains de substrat de filtration sont brassés anarchiquement, en suspension à l'intérieur de la poche, ayant pour effet de favoriser un contact surfacique maximal avec l'eau qui traverse la poche. Le taux de remplissage des poches filtrantes 2 peut être compris entre 50% et 90%.

Le charbon est de préférence d'origine végétale, et activé chimiquement pour augmenter la porosité du charbon et/ou greffer une chimie de surface spécifique, augmentant ainsi sa surface spécifique et son pouvoir d'adsorption. Le charbon issu de coques de noix de coco offre d'excellentes capacités d'absorption grâce à sa structure microporeuse. Il peut se présenter en granulés ou particules de granulométrie comprise par exemple entre 0,5 et 5mm, sans que ces valeurs ne soient limitatives. Le charbon actif permet notamment le piégeage des molécules d'acide cyanurique.

Tout ou partie des poches filtrantes 2 peut contenir d'autres substrats de filtration adsorbants et/ou libérant une ou plusieurs molécules spécifiques, tels que des zéolithes pour éliminer certains métaux lourds, des grains d'argent pour conférer un effet biocide au groupe de filtration, des billes d'argile pour purifier l'eau, des grains de résine anti phosphate pour piéger les phosphates et réduire ainsi la croissance des algues, sans que cette liste ne soit exhaustive. Ainsi, il est possible de combiner très facilement différents substrats dans un même support de média filtrant 10 permettant de couvrir un spectre très large de molécules cibles.

Les poches filtrantes 2 doivent répondre à un cahier des charges strict. Elles doivent être poreuses et perméables à l'eau pour pouvoir être traversées par l'eau à traiter, favoriser le contact de l'eau avec le substrat de filtration qu'elles contiennent, et permettre ainsi au substrat de filtration d'infuser en baignant dans l'eau à traiter optimisant les effets techniques du substrat. Aucune différence de pression d'eau entre l'extérieur et l'intérieur des poches n'est nécessaire pour leur fonctionnement, à l'inverse des filtres mécaniques. Elles doivent assurer une filtration moléculaire de l'eau en contact avec les poches, et simultanément former une barrière mécanique pour empêcher les fines de substrat, notamment de charbon actif ou autre, de s'échapper des poches et de polluer l'eau du bassin. Les poches filtrantes 2 sont donc sélectives en termes de capacité de filtration mécanique pour contenir le charbon actif qui ne peut pas s'échapper de la poche, sans pour autant filtrer les autres impuretés et matières organiques présentes dans l'eau du bassin. L'intérêt de cette solution technique est que les poches ne se colmatent pas et restent moléculairement opérationnelles contrairement aux poches de l'art antérieur. Les poches filtrantes 1 selon l'invention assurent ainsi une fonction de filtration moléculaire pour l'eau du bassin et une fonction de filtration mécanique uniquement pour le charbon actif ou tout autre substrat qu'elles contiennent.

La porosité des poches est déterminée de telle sorte que le diamètre moyen des pores soit inférieur à la taille minimale des fines de charbon actif (de l'ordre du micromètre) ou de tout autre substrat de filtration, pour limiter voire empêcher les fines particules de substrat érodé par l'abrasion de l'eau de s'échapper. Les poches doivent également être résistantes dans les trois dimensions pour durer dans le temps, et tout au moins sur la durée de vie préconisée pour le consommable. On choisira un matériau tel qu'une étoffe, une toile, une nappe, un feutre ou un film, offrant d'une part une finesse de filtration (porosité) comprise entre 0,5µ et 40µ, de préférence entre 0,5µ et 20µ, et préférentiellement entre 0,5µ et 10µ, et d'autre part une perméabilité à l'air à 125Pa d'environ 750 l/m²s, la perméabilité à l'air à 125Pa pouvant varier entre 5001/m²s et 1000m/m²s, sans que ces valeurs ne soient limitatives. Il est important que dans le cadre de l'invention, la finesse de filtration n'altère pas la fonction de barrière mécanique des poches qui ne sert qu'à retenir les fines de substrat qu'elles contiennent.

Ce matériau peut être un produit textile intissé, non tissé, tissé, tricoté, tressé, une combinaison de ces techniques, ou encore toute autre technique équivalente. Elle peut être obtenue à partir de fibres, filaments et/ou fils, dans toute matière compatible avec le cahier des charges et pouvant être assemblée par couture et/ou soudure, telle qu'une matière naturelle, artificielle ou synthétique. On choisira de préférence une matière synthétique, préférentiellement recyclable, comme les polypropylènes (PP), les polyéthylènes téréphtalates (PET), les polyéthylènes (PE), une combinaison de ces matières, qui a l'avantage d'être thermosoudable. On choisira également de préférence une matière hydrophobe. En effet, les propriétés hydrophobes rendent les poches difficiles à colmater notamment sur leur surface externe par le dépôt d'impuretés et de matières organiques transportées par l'eau. La filtration moléculaire reste par conséquent optimale en minimisant la filtration mécanique de la surface externe des poches. L'étoffe des poches filtrantes 2 peut également être un film synthétique extrudé et micro-perforé, ou similaire, présentant des propriétés hydrophobes et des caractéristiques de perméabilité et de porosité similaires à celles décrites ci-dessus.

Les poches présentent une forme tubulaire pincée ou aplatie aux deux extrémités. Ainsi accrochée en position verticale par ses deux extrémités aplaties, la forme de la poche permet d'obtenir :
- un brassage optimal des grains de substrat à l'intérieur de la poche,
- un profil hydrodynamique de la poche permettant d'une part l'introduction de l'eau à l'intérieur de la poche (les extrémités aplaties étant parallèles au flux d'eau) et d'autre part l'évacuation automatique des impuretés et des matières organiques transportées par l'eau qui ne peuvent pas entrer dans la poche et se déposeraient à la surface de la poche, évitant ainsi le risque de colmatage de la poche et la réduction de l'efficacité de « l'infusion » du charbon actif ou tout autre substrat dans l'eau à traiter.

La confection des poches filtrantes 2 peut faire appel à différents procédés de fabrication connus, tels que par couture, soudure thermique par ultrasons ou par impulsions, thermoformage, ou tout autre procédé compatible avec la matière de l'étoffe utilisée, l'essentiel étant d'éviter la colle qui pourrait se dégrader au contact de l'eau, et de résister mécaniquement à l'abrasion de l'eau.

Les poches filtrantes 2 forment ainsi un produit consommable, c'est-à-dire un produit qui a une durée de vie déterminée et qui doit être remplacé régulièrement pour garantir ses fonctionnalités et son efficacité. Après usage, les poches filtrantes peuvent être jetées ou préférentiellement mises au composte, ou encore régénérées selon le substrat de filtration qu'elles comportent. Elles sont conçues pour ne générer que peu voire aucun déchet.

L'étage de filtration particulaire 108 illustré à la figure 1 comporte un noyau central 111 creux qui définit en partie le conduit central 110 pour permettre le passage de l'eau dans le sens de circulation retour. Il comporte également un filtre textile 112 de type connu, agencé pour assurer une filtration particulaire, et disposé autour du noyau central 111. Il peut comporter tout autre type de filtre connu, remplissant la même fonction, tel qu'une mousse, une poche, une combinaison de différents types de filtres, etc. Le filtre textile 112 comporte de manière connue des plis pour créer une structure en accordéon ou toute autre géométrie permettant de créer une surface de filtration importante pour capter et piéger les particules solides transportées par l'eau à traiter.

Le filtre textile 112 particulaire peut être constitué d'une feuille filtrante intissée ou non tissée, à partir de fibres polyester (PES) thermocollées. La feuille filtrante peut être fabriquée à partir des fibres, filaments et/ou fils, de différentes matières compatibles, telles qu'en polypropylène (PP), polyéthylène téréphtalate (PET), polyéthylène (PE), ou similaire. L'assemblage des fibres, filaments et/ou fils peut être également différent et compatible, notamment par tissage, tricotage et/ou tressage pour remplacer le thermocollage.

L'étage de filtration particulaire 108 comporte en outre des orifices d'évacuation 113 dans la partie haute du noyau central 111 pour le passage de l'eau, et une poignée 114 pour former une cartouche interchangeable. Tout autre système de filtration particulaire peut toutefois convenir.

Le fonctionnement de l'unité de filtration 100 est illustré à la figure 1. L'eau à traiter contenue dans un bassin (non représenté) entre dans la cuve 101 par l'orifice d'entrée 105 prévu en partie basse, puis dans l'étage de filtration inférieur 107 à travers le flasque inférieur 11 du support 10. L'eau circule alors à travers les poches filtrantes 2 qui assurent une filtration moléculaire grâce aux propriétés absorbantes du charbon actif et/ou des autres substrats de filtration moléculaire.

Les molécules d'acide cyanurique, ainsi que tous les autres contaminants indésirables (phosphates, nitrates, THMs, chloroforme, métaux lourds, etc....) transportés par l'eau à traiter sont piégées par le charbon actif et/ou les autres substrats de filtration moléculaire (anti-phosphates, etc...). Le piégeage de la ou des molécule(s) cible(s) s'effectue lorsque cette(ces) dernière(s) passe(nt) au voisinage du substrat pour qu'une interaction physico-chimique puisse s'établir. Notamment, la rétention du stabilisant (acide cyanurique) s'effectue progressivement au fur et à mesure des passages répétés de l'eau à travers les poches filtrantes 2. Il n'y a donc aucun risque de « déstabiliser » l'eau de piscine, puisque le charbon actif ne va retirer que l'excédent de stabilisant.

En continuant sa circulation forcée imposée par la pompe du système de filtration, l'eau traitée au niveau moléculaire entre dans l'étage de filtration supérieur 108 à travers le flasque supérieur 12 du support 10. L'eau circule alors à travers le média filtrant 112 qui assure une filtration particulaire, débarrassant l'eau des particules solides typiquement présentent dans une piscine (sable, insectes, matières végétales, microalgues, etc...) mais aussi des grains de substrats de filtration moléculaire en cas de rupture accidentelle d'une poche filtrante 2. En continuant sa circulation forcée imposée par la pompe du système de filtration, l'eau traitée au niveau moléculaire et au niveau particulaire entre dans le conduit central 110 par les orifices d'évacuation 113 en partie haute du noyau central 111 et retourne dans le bassin par l'orifice de sortie 106 en partie basse de la cuve 101.

En cas de colmatage de l'étage de filtration moléculaire 107, la dépression générée par la pompe du système de filtration provoque alors l'ouverture partielle du joint périphérique 15. Le joint formant une soupape de régulation ouvre le passage entre les deux étages de filtration 107 et 108, permet la circulation de l'eau vers l'étage de filtration particulaire 108 et le rétablissement du débit nominal défini par la pompe. Ainsi la filtration particulaire et la circulation de l'eau dans la piscine restent assurées, sans pertes de charges. La filtration moléculaire n'a donc aucun impact négatif sur la filtration particulaire ni sur le bon fonctionnement de l'unité de filtration 100 et sur le débit d'eau.

Si à l'étage de filtration moléculaire 107, des particules de charbon actif devaient passer la barrière des poches filtrantes 2, notamment en cas de rupture accidentelle d'une poche, alors elles pourraient être captées et piégées par l'étage de filtration particulaires 108, sans aboutir dans le bassin.

## Revendications

1. Média filtrant (1) de type moléculaire pour unité de filtration (100) d'eau dans un bassin notamment une piscine, comportant au moins une poche filtrante (2) dans laquelle est enfermé au moins un substrat de filtration moléculaire, solide, agencé pour piéger des contaminants moléculaires transportés par l'eau à traiter, **caractérisé en ce que** ladite au moins une poche filtrante (2) est réalisée dans un matériau offrant une perméabilité à l'air à 125Pa comprise entre 500l/m²s et 1000l/m²s et une porosité comprise entre 0,5µ et 40µ, ladite au moins une poche filtrante (2) étant perméable et poreuse, de sorte à assurer d'une part un passage de l'eau à traiter à travers ladite poche, sans nécessité de différence de pression entre l'intérieur et l'extérieur de ladite poche, pour permettre une infusion dudit substrat de filtration dans l'eau à traiter, et d'autre part une barrière audit au moins un substrat de filtration, pour empêcher des particules fines de substrat de filtration érodé par l'eau à traiter de s'échapper de ladite poche filtrante et de polluer l'eau du bassin.

2. Média filtrant (1) selon la revendication 1, **caractérisée en ce que** ladite au moins une poche filtrante (2) est souple, présente une forme de tube cylindrique (3) fermé à ses deux extrémités (5) aplaties, et comporte des moyens de fixation (4) à un support, lesdits moyens de fixation étant disposés dans les deux extrémité (5, 8) aplaties de ladite poche.

3. Média filtrant selon l'une quelconque des revendications 1 à 2, **caractérisé en ce que** ledit au moins un substrat de filtration solide est choisi dans le groupe comprenant des granulés de charbon actif, des zéolithes, des billes d'argile, des grains de résine anti-phosphate, des grains d'argent, agencés pour piéger les contaminants choisis dans le groupe comprenant de l'acide cyanurique, des phosphates, des nitrates, des THMs, du chloroforme, des métaux lourds.

4. Média filtrant selon la revendication 3, **caractérisé en ce que** ledit charbon actif est un charbon issu de coques de noix de coco.

5. Média filtrant selon l'une quelconque des revendications 1 à 4, **caractérisé en ce que** ladite au moins une poche filtrante (2) est partiellement remplie avec ledit au moins un substrat de filtration, le taux de remplissage étant compris entre 50% et 90%.

6. Média filtrant selon l'une quelconque des revendications 1 à 5, **caractérisé en ce que** ladite poche filtrante (2) est réalisée dans un produit textile intissé, non tissé, tissé, tricoté et/ou tressé, à partir de fils, filaments et/ou fibres, ou dans un film extrudé et micro-perforé, dans une matière synthétique, hydrophobe, préférentiellement recyclable, choisie dans le groupe comportant les polypropylènes (PP), les polyéthylènes téréphtalates (PET), les polyéthylènes (PE), ou une combinaison de ces matières.

7. Média filtrant selon l'une quelconque des revendications 1 à 6, **caractérisé en ce qu'**il comporte un nombre N de poches filtrantes (2), lesdites poches filtrantes contenant un même substrat de filtration ou au moins deux substrats de filtration différents.

8. Média filtrant selon la revendication 7, **caractérisé en ce que** les N poches filtrantes (2) sont reliées entre elles par un lien (6) pour former un chapelet (20).

9. Support de média filtrant (10) pour unité de filtration (100) d'eau dans un bassin notamment une piscine, **caractérisé en ce qu'**il comporte un média filtrant (1) selon l'une quelconque des revendications 1 à 8 et des moyens de réception (14) coopérant avec les moyens de fixation (4) dudit média filtrant pour positionner et maintenir ledit média filtrant (1) par ses deux extrémités, et permettre son montage et son démontage dudit support.

10. Support de média filtrant selon la revendication 9, **caractérisé en ce qu'**il comporte un touret comprenant deux flasques (11, 12) parallèles et un tube central (13) reliant les deux flasques, chacun desdits flasques (11, 12) comportant lesdits moyens de réception (14) dudit média filtrant (1).

11. Support de média filtrant selon l'une quelconque des revendications 9 et 10, **caractérisé en ce que** les moyens de réception (14) dudit support (10) comportent au moins un crochet coopérant avec au moins un orifice (4) correspondant prévu dans ledit média filtrant (1).

12. Support de média filtrant selon la revendication 10, **caractérisé en ce que** ledit média filtrant (1) comporte N poches filtrantes (2), et **en ce que** les N poches filtrantes (2) sont disposées autour du tube central (13) dudit support, s'étendent parallèlement audit tube central (13), et sont accrochées aux deux flasques (11, 12) dudit support.

13. Support de média filtrant selon la revendication 12, **caractérisé en ce qu'**au moins un desdits flasques (12) comporte un joint périphérique (15) agencé pour former une soupape de régulation.

14. Unité de filtration (100) d'eau dans un bassin notamment une piscine, ladite unité de filtration comportant une cuve (101) pourvue au moins d'un orifice d'entrée (105) et d'un orifice de sortie (106) pour permettre une circulation de l'eau à traiter, ladite cuve comportant au moins un étage de filtration moléculaire (107), **caractérisée en ce que** ledit étage de filtration moléculaire (107) comporte au moins un support de média filtrant (10) selon l'une quelconque des revendications 9 à 13.

15. Unité de filtration selon la revendication 14, dans laquelle ladite cuve (101) comporte au moins deux étages de filtration superposés, dont un étage de filtration moléculaire (107) et un étage de filtration particulaire (108), **caractérisée en ce que** ledit étage de filtration moléculaire (107) est situé en aval dudit étage de filtration particulaire (108), et **en ce que** les deux étages de filtration sont séparés entre eux par le joint périphérique (15) formant une soupape de régulation, prévu sur un des flasques (12) dudit support (10).

16. Unité de filtration selon la revendication 15, **caractérisée en ce qu'**elle est conçue de manière modulaire, le rapport entre la hauteur de l'étage de filtration moléculaire (107) et la hauteur de l'étage de filtration particulaire (108) étant modulable et déterminé en fonction des besoins de filtration.

17. Utilisation du média filtrant (1) selon l'une quelconque des revendications 1 à 8, posé directement dans la partie supérieure d'un filtre à sable et/ou dans le panier d'un skimmer et/ou accroché à l'intérieur d'une chaussette de filtration.

18. Procédé de filtration d'eau dans un bassin notamment une piscine, comportant au moins une étape de filtration particulaire de l'eau à traiter et une étape de filtration moléculaire de l'eau à traiter effectuée séparément de ladite étape de filtration particulaire, procédé **caractérisé en ce que** ladite étape de filtration moléculaire est effectuée par un média filtrant (1) selon l'une quelconque des revendications 1 à 8, comportant au moins une poche filtrante (2) dans laquelle est enfermé au moins un substrat de filtration moléculaire, solide, agencé pour piéger des contaminants moléculaires transportés par l'eau à traiter, ladite au moins une poche filtrante (2) étant perméable et poreuse pour assurer d'une part un passage de l'eau à traiter à travers ladite poche, sans nécessité de différence de pression entre l'intérieur et l'extérieur de ladite poche, pour permettre une infusion dudit substrat de filtration dans l'eau à traiter, et d'autre part une barrière audit au moins un substrat de filtration, pour empêcher des fines de substrat de filtration érodé par l'eau à traiter de s'échapper de ladite poche filtrante et de polluer l'eau du bassin.

## Patentansprüche

1. Molekularfiltermedium (1) für eine Wasserfilteranlage (100) in einem Becken, insbesondere einem Schwimmbecken, mit mindestens einem Filterbeutel (2), in dem mindestens ein festes Molekularfiltersubstrat eingeschlossen ist, das dazu ausgelegt ist, molekulare Verunreinigungen aufzunehmen, die im Wasser mitgeführt werden, das zu behandeln ist, **dadurch gekennzeichnet, dass** der mindestens eine Filterbeutel (2) aus einem Material besteht, das bei 125 Pa einen Luftdurchlässigkeitsbeiwert zwischen 5.00l/m²s und 10.00l/m²s und eine Porosität zwischen 0,5 µ und 40 µ aufweist, wobei der mindestens eine Filterbeutel (2) durchlässig und porös ist, um einerseits sicherzustellen, dass das zu behandelnde Wasser durch den Beutel fließt, ohne dass ein Druckunterschied zwischen dem Innen- und dem Außenbereich des Beutels erforderlich wäre, damit einerseits das Filtersubstrat von dem zu behandelnden Wasser durchtränkt wird und andererseits eine Barriere für das mindestens eine Filtersubstrat entsteht, um zu verhindern, dass feine Partikel des Filtersubstrats, die vom zu behandelnden Wasser abgetragen werden, aus dem Filterbeutel entweichen und das Beckenwasser verunreinigen.

2. Filtermedium (1) nach Anspruch 1, **dadurch gekennzeichnet, dass** der mindestens eine Filterbeutel (2) biegsam ist, die Form eines Zylinderrohrs (3) aufweist, das an seinen beiden abgeflachten Enden (5) geschlossen ist, und Befestigungsmittel (4) zur Befestigung an einem Träger enthält, wobei die Befestigungsmittel in den beiden abgeflachten Enden (5, 8) des Beutels angeordnet sind.

3. Filtermedium nach einem der Ansprüche 1 bis 2, **dadurch gekennzeichnet, dass** das mindestens eine feste Filtersubstrat aus der Gruppe ausgewählt ist, die Aktivkohlegranulat, Zeolithe, Blähton, phosphatbindende Harzkörner, Silberkörner zur Aufnahme von Schadstoffen umfasst, die aus der Gruppe ausgewählt sind, die aus Cyanursäure, Phosphaten, Nitraten, THMs, Chloroform und Schwermetallen besteht.

4. Filtermedium nach Anspruch 3, **dadurch gekennzeichnet, dass** die Aktivkohle aus Kokosnussschalen gewonnen wird.

5. Filtermedium nach einem der Ansprüche 1 bis 4, **dadurch gekennzeichnet, dass** der mindestens eine Filterbeutel (2) teilweise mit dem mindestens einen Filtersubstrat gefüllt ist, wobei der Prozentsatz der Befüllung zwischen 50 % und 90 % liegt.

6. Filtermedium nach einem der Ansprüche 1 bis 5, **dadurch gekennzeichnet, dass** der Filterbeutel (2) aus einem Vliesstoff oder einer nicht gewebten, gewebten, gestrickten und/oder geflochtenen Textilware aus Garnen, Fäden und/oder Fasern oder aus einer extrudierten und mikroperforierten Folie aus einem synthetischen, hydrophoben, vorzugsweise recycelbaren Material hergestellt ist, das aus der Gruppe ausgewählt ist, die aus Polypropylen (PP), Polyethylenterephthalat (PET), Polyethylen (PE) oder einer Kombination dieser Materialien besteht.

7. Filtermedium nach einem der Ansprüche 1 bis 6, **dadurch gekennzeichnet, dass** es eine Anzahl N von Filterbeuteln (2) umfasst, wobei die Filterbeutel ein und dasselbe Filtersubstrat oder mindestens zwei verschiedene Filtersubstrate enthalten.

8. Filtermedium nach Anspruch 7, **dadurch gekennzeichnet, dass** die N Filterbeutel (2) durch ein Verbindungselement (6) miteinander verbunden sind, um eine Aufreihung (20) zu bilden.

9. Filtermediumträger (10) für eine Wasserfilteranlage (100) in einem Becken, insbesondere einem Schwimmbecken, **dadurch gekennzeichnet, dass** er ein Filtermedium (1) nach einem der Ansprüche 1 bis 8 und Aufnahmemittel (14) umfasst, die mit den Befestigungsmitteln (4) des Filtermediums zusammenwirken, damit das Filtermedium (1) an beiden Enden positioniert und gehalten wird und am Träger montiert und von diesem abgenommen werden kann.

10. Filtermediumträger nach Anspruch 9, **dadurch gekennzeichnet, dass** er eine Haspel umfasst, die zwei parallele Flansche (11, 12) und ein Mittelrohr (13) aufweist, das die beiden Flansche verbindet, wobei jeder der Flansche (11, 12) die Aufnahmemittel (14) für das Filtermedium (1) aufweist.

11. Filtermediumträger nach einem der Ansprüche 9 und 10, **dadurch gekennzeichnet, dass** die Aufnahmemittel (14) des Trägers (10) mindestens einen Haken enthalten, der mit mindestens einer entsprechenden Öffnung (4) im Filtermedium (1) zusammenwirkt.

12. Filtermediumträger nach Anspruch 10, **dadurch gekennzeichnet, dass** das Filtermedium (1) N Filterbeutel (2) aufweist, und dass die N Filterbeutel (2) um das Mittelrohr (13) des Trägers herum angeordnet sind, sich parallel zu dem Mittelrohr (13) erstrecken und an den beiden Flanschen (11, 12) des Trägers eingehängt sind.

13. Filtermediumträger nach Anspruch 12, **dadurch gekennzeichnet, dass** mindestens einer der Flansche (12) eine Umfangsdichtung (15) aufweist, die zur Bildung eines Regelventils ausgelegt ist.

14. Wasserfilteranlage (100) in einem Becken, insbesondere einem Schwimmbecken, wobei die Filteranlage einen Behälter (101) umfasst, der mit mindestens einer Einlassöffnung (105) und einer Auslassöffnung (106) versehen ist, um eine Zirkulation des zu behandelnden Wassers zu ermöglichen, wobei der Behälter mindestens eine Molekularfiltrationsstufe (107) aufweist, **dadurch gekennzeichnet, dass** die Molekularfiltrationsstufe (107) mindestens einen Filtermedienträger (10) nach einem der Ansprüche 9 bis 13 enthält.

15. Filteranlage nach Anspruch 14, wobei der Behälter (101) mindestens zwei übereinander angeordnete Filterstufen aufweist, darunter eine Molekularfilterstufe (107) und eine Partikelfilterstufe (108), **dadurch gekennzeichnet, dass** die Molekularfilterstufe (107) nach der Partikelfilterstufe (108) angeordnet ist und dass die beiden Filterstufen durch die Umfangsdichtung (15) voneinander getrennt sind, die ein Regelventil bildet und die an einem der Flansche (12) des Trägers (10) vorgesehen ist.

16. Filteranlage nach Anspruch 15, **dadurch gekennzeichnet, dass** diese modular aufgebaut ist, wobei das Verhältnis zwischen der Höhe der Molekularfilterstufe (107) und der Höhe der Partikelfilterstufe (108) veränderbar ist und entsprechend den Filteranforderungen festgelegt wird.

17. Verwendung des Filtermediums (1) nach einem der Ansprüche 1 bis 8, das direkt in den oberen Teil eines Sandfilters und/oder in den Korb eines Skimmers eingelegt ist und/oder in einen Filterstrumpf eingehängt wird.

18. Verfahren zur Wasserfiltration in einem Becken, insbesondere einem Schwimmbecken, das mindestens einen Schritt zur Partikelfiltration des zu behandelnden Wassers und einen Schritt zur Molekularfiltration des zu behandelnden Wassers umfasst, der getrennt von dem genannten Partikelfiltrationsschritt durchgeführt wird, **dadurch gekennzeichnet, dass** der Schritt der molekularen Filtration durch ein Filtermedium (1) nach einem der Ansprüche 1 bis 8 durchgeführt wird, das mindestens einen Filterbeutel (2) aufweist, in dem mindestens ein festes Molekularfiltersubstrat eingeschlossen ist, das dazu dient, molekulare Verunreinigungen aus dem zu behandelnden Wasser aufzunehmen, wobei der mindestens eine Filterbeutel (2) durchlässig und porös ist, um einerseits einen Durchfluss des zu behandelnden Wassers durch den Filterbeutel zu gewährleisten, ohne dass ein Druckunterschied zwischen dem Innen- und dem Außenbereich des Filterbeutels erforderlich wäre, damit einerseits das Filtersubstrat von dem zu behandelnden Wasser durchtränkt wird und andererseits eine Barriere für das mindestens eine Filtersubstrat entsteht, um zu verhindern, dass feine Partikel des Filtersubstrats, die vom zu behandelnden Wasser abgetragen werden, aus dem Filterbeutel entweichen und das Wasser des Beckens verunreinigen.

## Claims

1. A molecular filter medium (1) for a water filtration unit (100) in a basin, in particular a swimming pool, comprising at least one filter bag (2) enclosing at least one solid molecular filtration substrate, arranged to trap molecular contaminants carried by the water to be treated, **characterised in that** said at least one filter bag (2) is made of a material having an air permeability at 125 Pa of between 500 l/m²/s and 1000 l/m²/s and a pore size of between 0.5 µm and 40 µm, said at least one filter bag (2) being permeable and porous, so as, on the one hand, to allow the water to be treated to pass through said bag without requiring a pressure differential between the inside and the outside of said bag, thereby allowing intimate contact between the molecular filtration substrate and the water to be treated, and, on the other hand, to form a barrier to said at least one filtration substrate so as to prevent fine particles of filtration substrate eroded by the water to be treated from escaping from said filter bag and contaminating the water in the basin.

2. The filter medium (1) according to claim 1, **characterised in that** said at least one filter bag (2) is flexible, has the shape of a cylindrical tube (3) closed at its two flattened ends (5), and comprises means (4) for fixing to a support, said fixing means being arranged in the two flattened ends (5, 8) of said bag.

3. The filter medium according to any one of claims 1 to 2, **characterised in that** said at least one solid filtration substrate is selected from the group comprising activated carbon granules, zeolites, clay beads, anti-phosphate resin grains, silver grains, all arranged to trap contaminants selected from the group comprising cyanuric acid, phosphates, nitrates, THMs, chloroform, heavy metals.

4. The filter medium according to claim 3, **characterised in that** said activated carbon is a carbon derived from coconut shells.

5. The filter medium according to any one of claims 1 to 4, **characterised in that** said at least one filter bag (2) is partially filled with said at least one filtration substrate, the filling ratio being between 50% and 90%.

6. The filter medium according to any one of claims 1 to 5, **characterised in that** said filter bag (2) is made of a non-woven, woven, knitted and/or braided textile product, from yarns, filaments and/or fibres, or of an extruded and microperforated film, in a synthetic, hydrophobic, preferably recyclable material, selected from the group consisting of polypropylenes (PP), polyethylene terephthalates (PET), polyethylenes (PE), or a combination of these materials.

7. The filter medium according to any one of claims 1 to 6, **characterised in that** it comprises a number N of filter bags (2), said filter bags containing the same filtration substrate or at least two different filtration substrates.

8. The filter medium according to claim 7, **characterised in that** the N filter bags (2) are connected to each other by a link (6) to form a string (20).

9. A filter medium support (10) for a water filtration unit (100) in a basin, in particular a swimming pool, **characterised in that** it comprises a filter medium (1) according to any one of claims 1 to 8 and receiving means (14) cooperating with the means (4) for fixing said filter medium to position and hold said filter medium (1) by its two ends, and to enable it to be mounted on and removed from said support.

10. The filter medium support according to claim 9, **characterised in that** it comprises a spool comprising two parallel flanges (11, 12) and a central tube (13) connecting the two flanges, each of said flanges (11, 12) comprising said receiving means (14) for said filter medium (1).

11. The filter medium support according to any one of claims 9 and 10, **characterised in that** the means (14) for receiving said support (10) comprise at least one hook cooperating with at least one corresponding orifice (4) provided in said filter medium (1).

12. The filter medium support according to claim 10, **characterised in that** said filter medium (1) comprises N filter bags (2), and **in that** the N filter bags (2) are arranged around the central tube (13) of said support, extend parallel to said central tube (13), and are attached to the two flanges (11, 12) of said support.

13. The filter medium support according to claim 12, **characterised in that** at least one of said flanges (12) comprises a peripheral seal (15) arranged to form a regulating valve.

14. A filtration unit (100) for water in a basin, in particular a swimming pool, said filtration unit comprising a tank (101) provided with at least one inlet orifice (105) and one outlet orifice (106) to allow circulation of the water to be treated, said tank comprising at least one molecular filtration stage (107), **characterised in that** said molecular filtration stage (107) comprises at least one filter medium support (10) according to any one of claims 9 to 13.

15. The filtration unit according to claim 14, wherein said tank (101) comprises at least two superposed filtration stages, including a molecular filtration stage (107) and a particulate filtration stage (108), **characterised in that** said molecular filtration stage (107) is located downstream of said particulate filtration stage (108), and **in that** the two filtration stages are separated from each other by the peripheral seal (15) forming a regulating valve, provided on one of the flanges (12) of said support (10).

16. The filtration unit according to claim 15, **characterised in that** it is designed in a modular manner, the ratio between the height of the molecular filtration stage (107) and the height of the particulate filtration stage (108) being adjustable and determined according to the filtration needs.

17. Use of the filter medium (1) according to any one of claims 1 to 8, placed directly in the upper part of a sand filter and/or in the basket of a skimmer and/or hung inside a filtration sock.

18. A method of filtering water in a basin, in particular a swimming pool, comprising at least one step of particulate filtration of the water to be treated and a step of molecular filtration of the water to be treated carried out separately from said particulate filtration step, said method being **characterised in that** said molecular filtration step is carried out by a filter medium (1) according to any one of claims 1 to 8, comprising at least one filter bag (2) enclosing at least one solid molecular filtration substrate, arranged to trap molecular contaminants carried by the water to be treated, said at least one filter bag (2) being permeable and porous so as, on the one hand, to allow the water to be treated to pass through said bag, without requiring a pressure differential between the inside and the outside of said bag, thereby allowing intimate contact between the molecular filtration substrate and the water to be treated, and, on the other hand, to form a barrier to said at least one filtration substrate, so as to prevent fine filtration substrate particles eroded by the water to be treated from escaping from said filter bag and contaminating the water in the basin.
